Europäisches Patentamt

European Patent Office

Office européen des brevets

(11) Publication number: **0 182 437**
**B1**

(12) **EUROPEAN PATENT SPECIFICATION**

(45) Date of publication of patent specification: **18.07.90**

(51) Int. Cl.⁵: **B 62 D 49/06, B 62 D 49/02**

(21) Application number: **85201876.1**

(22) Date of filing: **14.11.85**

(60) Divisional application 89122064.2 filed on 14/11/85.

(54) Tractor.

(30) Priority: **15.11.84 NL 8403484**

(43) Date of publication of application:
**28.05.86 Bulletin 86/22**

(45) Publication of the grant of the patent:
**18.07.90 Bulletin 90/29**

(84) Designated Contracting States:
**DE FR GB NL**

(56) References cited:
**DE-A-3 009 662**
**FR-A-2 013 853**
**US-A-4 161 991**

(73) Proprietor: **C. van der Lely N.V.**
**Weverskade 10 P.O. Box 26**
**NL-3155 ZG Maasland (NL)**

(72) Inventor: **van der Lely, Cornelis**
**7 Brüschenrain**
**Zug (CH)**

(74) Representative: **Mulder, Herman et al**
**Octrooibureau Van der Lely N.V. Weverskade 10**
**P.O. Box 26**
**NL-3155 ZG Maasland (NL)**

Courier Press, Leamington Spa, England.

## Description

The invention relates to a tractor, more specifically an agricultural tractor, having at least one internal combustion engine for driving one or more land wheels of the tractor, at least one lifting device for coupling implements to the tractor and to be driven from said engine, as well as at least one power take-off shaft mounted to the tractor frame for driving an implement coupled to a lifting device.

Known tractors of this type have the disadvantage that they are not suitable to efficiently perform important operations such as preparing and sowing fields. For these operations, a normal commercially available tractor, which requires a high-power engine for performing all common operations, including for example ploughing, is too heavy. To drive soil tilling implements, the prior art tractor does not require a great power relative to its total performance. Because of its great weight, the known, standard tractor spoils the soil structure, as a result of which plants develop to a less satisfactory extent and the yield becomes unsatisfactory.

Apart from this, under certain circumstances the power required for propelling a medium-class tractor and the implement(s) coupled thereto can temporarily increase to such an extent that the remaining power is not sufficient for driving the implements, so that the tractor's engine as well as the drive of the power take-off shaft will stall.

It is an object of the invention to obviate these disadvantages.

According to the invention, the tractor comprises a second internal combustion engine by means of which is drivable solely the implement which is coupled to the lifting device.

This furnishes the advantage that a comparatively light tractor having a drive designed for the transmission of medium power at the most will be able to perform a seed bed preparation without deterioration of the underlying soil structure. In order to exert greater tractive forces, a suitable implement driven by the second engine and coupled to a lifting device can be used to exert additional tractive forces without using transmission via the driven land wheels.

Moreover, the presence of a second engine driving one or more power take-off shafts offers the advantage that under all circumstances a defined amount of power is available for driving one or more implements attached to the lifting device(s). A high power consumption for propelling the tractor-implement combination and furnished by the other engine, can be handled by the torque-converter without adversely affecting the drive of the implement(s).

If that portion of the tractor driving the wheels comprises predominantly normal, commercially available tractor parts, such as a rear axle, cabin, a drive engine with gear box, the tractor parts being intended for commercially available tractors of the middle-weight category with a power of, for example, 70 kW (as described in the aforementioned example), the further advantage is obtained that the price of the tractor parts is less than the price of corresponding tractor parts intended for very heavy tractors (for example 140 kW) which, in contradistinction to the afore-mentioned lighter tractors, are manufactured in much smaller numbers.

The invention will now be described in greater detail by way of example with reference to the following Figures.

Figure 1 is a side elevational view of a first embodiment of a tractor according to the invention;

Figure 2 is a plan view along the arrow II in Figure 1;

Figure 3 is a front view along the line III—III in Figure 1.

Figure 4 is a side elevational view of a second embodiment of a tractor in accordance with the invention;

Figure 5 is a plan view along the arrow V in Figure 4;

Figure 6 is a front view along the arrow VI in Figure 4.

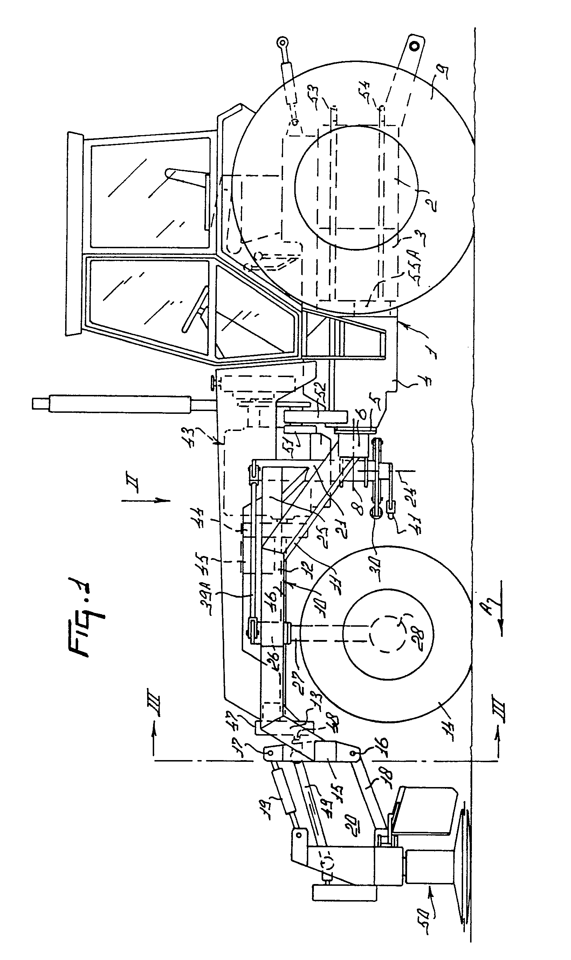

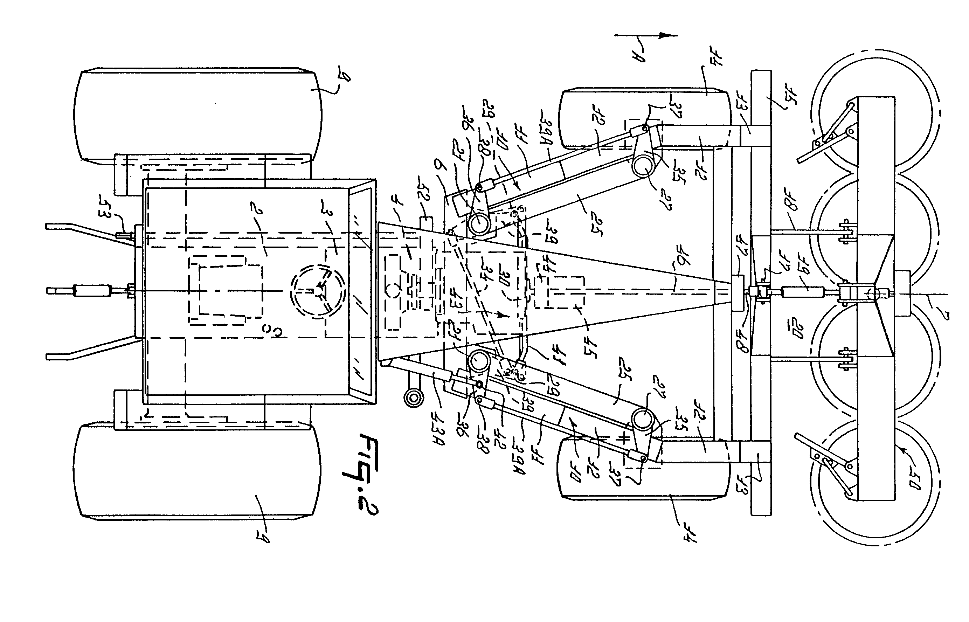

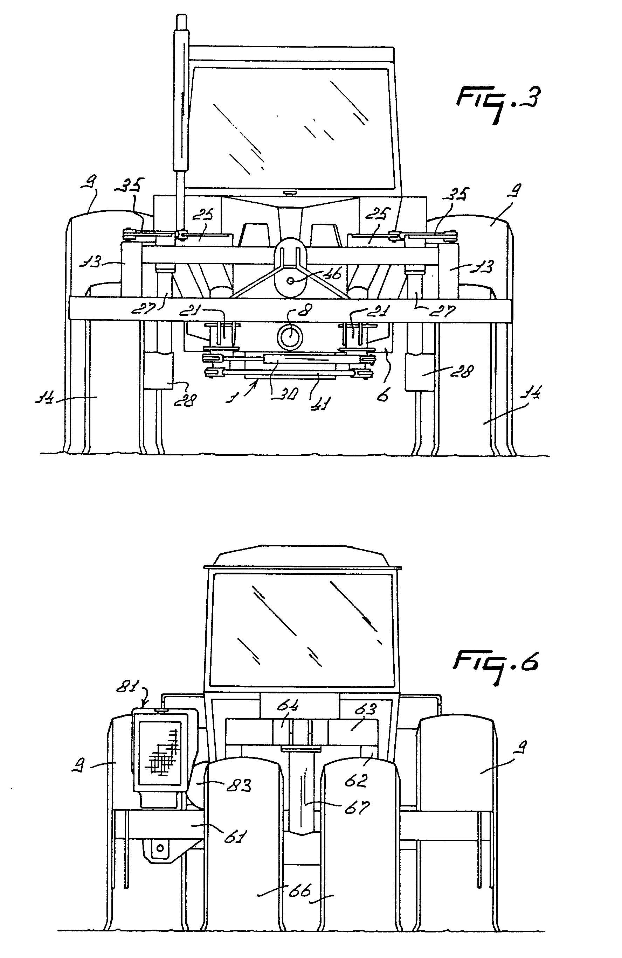

A frame 1 of the tractor shown in the Figures 1—5 is constituted by the housings of a differential and rear axle housing 2 of a gear box 3 fitted to the front thereof, and of a first drive engine 4 fastened to the front of said gear box, all this seen in the direction of travel A. Rear axle housing 2 is supported by rear wheels 9. The frame portions 2 - 4 are preferably constituted by standard production parts of large-scale produced tractors of the middle class having a capacity of, for example, approximately 70 kW. These standard parts have the advantage that their prices are comparatively low as these parts are produced in large quantities and moreover are comparatively light, as said parts need generate, or convey, only a comparatively low power. A radial bearing by means of which a beam 6 is supported capable of swivelling around a horizontal swivel axle 8 located in the vertical longitudinal symmetry plane 7 (Figure 2) of the tractor, is fitted to the front of the engine 4. The beam 6 extends transversely of the direction of travel A and, if the tractor stands on a flat plane, is in a horizontal direction. The beam 6 is constituted by a hollow cylindrical beam, is arranged symmetrically relative to the symmetry plane 7 and extends to approximately the plane defining the inner sides of the rear wheels fitted to the rear axle housing 2. The front part of the tractor is fastened to the beam 6, this part consequently being capable of swivelling around the swivel axle 8 relative to the frame 1 associated with the rearmost portion.

A portal structure which, in a side elevational view, is approximately in the shape of an arc, is rigidly fastened at each of the two ends of the beam 6; the two portal structures 10 are of a symmetrical construction relative to the symmetry plane 7. From each end of the beam 6, a hollow beam section 11 of the portal structure 10 extends obliquely in a forward, an upward and also an outward direction, which beam - in the forward direction - merges into a hollow cylindrical beam 12 which is directed approximately horizontally and in parallel with the symmetry plane 7, the beam 12 merging into a hollow cylindrical beam section 13 which is likewise directed in parallel with the symmetry plane 7 and inclines downwards from the beam 12. Seen in the side elevational view shown in Figure 1, the whole of the portal structure 10 is located outside the circumference of front wheels 14, still further to be described, and curves around the circumference of the upper portion of the front wheels 14. The two beams 13 of the structure 10 are rigidly interconnected by means of a hollow cross-beam 15, which is arranged parallel to the beam 6. Remote from the symmetry plane 7, lower connecting points 16 and near the symmetry plane 7 an upper connecting point 17 for two lower lifting arms 18 and an upper arm 19 of a front three-point lifting device 20 are provided on the cross-beam 15. In the lateral direction, the beams 12 and 13 are disposed near the vertical symmetry plane of the rear wheel 9 located at the same side of the plane 7. The beams 11 of the structure 10 are arranged such relative to the direction of travel A that they are mutually divergent (Figure 2).

At both sides of the plane of symmetry 7, a strong vertical bearing 21, supported by the beam 6, is arranged such that both bearings are symmetrically disposed with respect to said plane of symmetry. Both bearings support at their upper end a horizontal beam 25 which extends in forward direction (Figure 2), the lower sides of these beams being at nearly the same level as that of the beams 12.

At its front end, each beam 25 pivotally supports an outwardly extending lug 35 (Figure 2) fastened to the top of a wheel carrier 27 whereas at its rear end a lug 36 of the same dimensions as lug 35 and extending in the same direction, is rotatable about bearing 21. At each side of the plane of symmetry, the outer ends of lugs 35 and 36 are connected by a coupling rod 39A by means of pivot axes 37 and 38, respectively. The centre lines of bearing 21, wheel carrier 27 and pivot axes 37 and 38 form vertices of a parallelogram, as seen in plan view.

One of the lugs 36 can be actuated from the driver's seat about centre line 24 of the adjacent bearing 21 by means of hydraulic cylinder 43A. The dimensioning of said parallelogram is such that the steerable front wheel and a hydraulic engine 28 driving this front wheel, both being connected to wheel carrier 27, are capable of swivelling through an angle of about 65° to both one side and the other side from the appropriate position for driving straight.

Lugs 39 movable about the lower ends of both bearings 21 in a symmetrical way and connected to lugs 36, are intercoupled by a rod 41 extending perpendicularly to the plane of symmetry 7. By means of this intercoupling the steerable front wheel 14 disposed at the side remote from cylinder 43A will swivel through a steering angle corresponding to that of the other wheel 14 which is swivelled directly by cylinder 43A.

Further lugs 29 connected to bearings 21 and disposed in a symmetrical way, are connected by a further hydraulic cylinder 30. Actuation of cylinder 30 from the driver's seat results in pivoting of both beams 25 about their pivot axis 24 such that these beams and the front wheels 14 connected to them, are moved outwardly or inwardly in a symmetrical way with respect to the plane of symmetry, thus changing the track width of the front wheels relative to the rear wheels. This symmetrical movement is sustained by a further coupling rod 34 coupling said lugs 29, coupling rod 34 being connected to the respective lugs 29 at different sides of a plane comprising centre lines 24.

The tractor includes a second drive engine 43, whose crank shaft, which extends approximately in the direction of travel A. is located approximately in the symmetry plane 7. The engine 43 — as will be apparent from Figure 1 and considered in the direction of travel A — is arranged at least predominantly in front of and at an angle above the first drive engine 4, near the front portion of the tractor and behind the front axis determined by the rotary axis of the front wheels 14. In this embodiment, the second drive engine 43 also has a power of approximately 70 kW and may be of a structure identical to the engine 4 and be of the same production series. The engine 43 can be fastened to the frame 1, but it is alternatively possible for the engine 43 to be fastened to the front portion of the tractor, which is swivable relative to the frame 1 around the swivel axle 8. A reduction gear box 44, which comprises a clutch operable by the driver, is fitted to the front of engine 43. Dependent on the purposes set to the tractor, there may be fitted to the front of the engine 43 a hydraulic pump 45 drivable by this engine and being hydraulically coupled to the hydraulic engines 28 of the front wheels 14. This hydraulic coupling to the front wheels can be of a construction which allows its switch-on and switch-off from the driver's seat.

At its front the reduction gear box 44 has an outgoing shaft to which a forwardly-extending drive axle 46 is coupled, whose foremost end is in drivable connection, by means of a possibly changeable gear box 47, with a front power take-off shaft 48 of the tractor which, by means of an intermediate shaft 49 is capable of driving an agricultural machine 50 coupled to the foremost lifting device 20, with a speed of rotation of approximately 540 and/or 1000 revs/minute and which is supported by the frame 1 of the tractor by means of the gear box 47. The power take-off shaft drive 44, 46, 47, 48 is — as can be seen from Figure 1 — located substantially above the lowest boundary of the portal structure 10, so that the swivability of the front wheels 14 is not impeded.

At its rear side, the second drive engine 43 is provided with a clutch 51 directly attached to the frame 1, which clutch, via a possibly changeable reduction gear box 52, can drive a rear power take-off shaft 53 journalled relative to the housing 2 of the frame 1 with a speed of rotation of approximately 540 and/or 1000 revs/minute. The gear box 52 extends from the outgoing shaft of the second engine 43 at a downward angle and outwardly, so that the power take-off shaft 53 is passed along one of the sides of the frame 1. Consequently, the power take-off shaft 53 is located at one side and remote from the symmetry plane 7. The clutch 51, as also the clutch 44, is operable from the driver's seat. In addition to the rear power take-off shaft 53 the tractor has a second rear power take-off shaft 54, which is located in the symmetry plane 7 and is drivable by the first drive engine 4 via a clutch 55A (Figure 2) which is also operable from the driver's seat. The rear power take-off shaft 54 forms part of the standard components 2, 3, 4 such as they are mass-produced for a commercially available tractor. The latter also applies to a rear three-point lifting device 55 of the tractor.

In this embodiment the two engines are arranged approximately symmetrically relative to the symmetry plane 7.

During operation, the rear wheels 9 are driven by the first drive engine 4 in a manner customary for normal, middle-class commercial tractors, the drive torque being applied by means of the gear box 3 to be operated by the driver, to the differential and the rear axle housing 2. The second drive engine 43, which, as also the first drive engine 4, has a power of, for example, approximately 70 kW and in principle may be of an identical structure (although this is not imperative), drives during operation the rear power takeoff shaft 53 via the clutch 51 and the gear wheel transmission 52 and by means of the gear wheel transmission and clutch 44, drives the drive shaft 46, the gear box 47 and the front power take-off shaft 48. The second drive engine 43 can also drive the hydraulic pump 45 which — if so desired — can drive the hydraulic engines 28 and consequently the front wheels 14 via a hydraulic connection, not shown. This last-mentioned drive of the front wheels 14 is however not necessary in all circumstances. In known manner, the hydraulic pump 45 has an adjustable yield, which can be set from the driver's seat. If it is no longer necessary to drive the front wheels 14, the pump 45 can be set to "0" yield, as a result of which the entire power of the second drive engine 43 becomes available for driving the rear power take-off shaft 53 and the front power take-off shaft 48. This is of particular importance for feeding or preparing the seed bed of agricultural soil, for which no heavy tractive forces of the tractor are required, but wherein because of the presence of the second drive engine 43, a power of a defined maximum value is always available for driving machines coupled to the front lifting device 20 and to the rear lifting device 55, such as, for example, rotary harrows, rotary cultivators etc. For machines of such a type a power of approximately 70 kW is sufficient. This maximum power of the second drive engine 43 is not affected by the tractive force required by the tractor, supplied by the separate first drive engine 4. However, in a modified embodiment, it is also possible that the second engine 43 is capable of driving only a front power take-off shaft or a rear power take-off shaft.

For preparing the seed bed and seeding the field, a high-power, commercially available tractor (which power is required for large tractive forces, for example for ploughs) is too heavy. In addition, the axles, the gear box and other parts are adapted to this high power and consequently do not only have a heavy weight, but such drives are also comparatively expensive since the size of the series in which these heavy tractors are built, is comparatively small. Because of the high weight, these tractors spoil the soil structure, so that the crops develop less advantageously and the yield becomes unsatisfactory. By starting from a comparatively light tractor structure 2, 3, 4 an in principle light tractor is obtained, which at a power of approximately 70 kW can have a weight of approximately 4500 kgs, whilst because of the presence of the second engine of approximately 70 kW a total power of approximately 140 kW is available. As the weight of the second engine and its drives is approximately 500 kgs, the total weight of the tractor is significantly reduced compared with a tractor having a single engine with a power of approximately 140 kW. The soil structure is not adversely affected by the tractor according to the invention. and the yield of the crops is greater. In addition, the mechanical main parts are comparatively cheap because they are obtained from large-scale production runs and are of a relatively light construction.

By operating the hydraulic cylinder 30 a front wheel 14 located at some distance before an approximately vertical swivel axle 24 can be swivelled inwards or outwards, respectively, in a simple way to change the track width of the front wheels.

The driver further has a driver's cabin 56, which — as seen in the side elevational view of Figure 1 — is predominantly mounted over the rear wheels 9, so that the driver, who is seated in a driver's seat 57, has a good view of the implements fastened to the lifting device 55 and also of the implements fastened to the front lifting device 20. Also the setting of the track width of the front wheels 14 can be judged from the driver's seat 57. as the symmetrically arranged second engine 43 does not impede a proper view of this engine (cf. Figure 2).

In this embodiment the track width is adjustable from approximately 230 cms to approximately 75 cms. The rear wheels 9 have a diameter of approximately 160 cms and a width of approximately 60 cms, whilst in this embodiment the front wheels 14 have a diameter of approximately 120 cms and a width of approximately 40 - 60 cms.

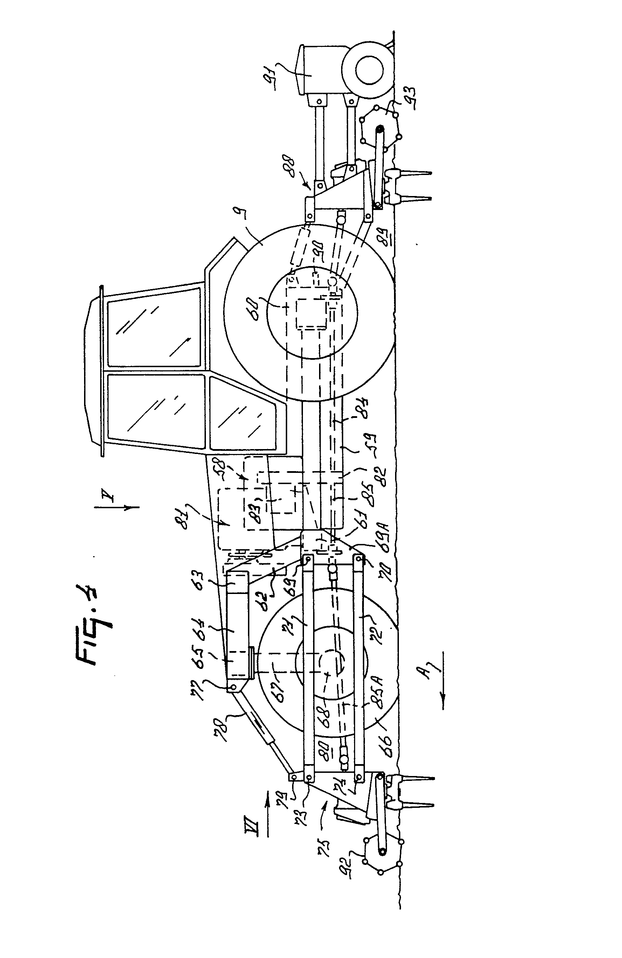

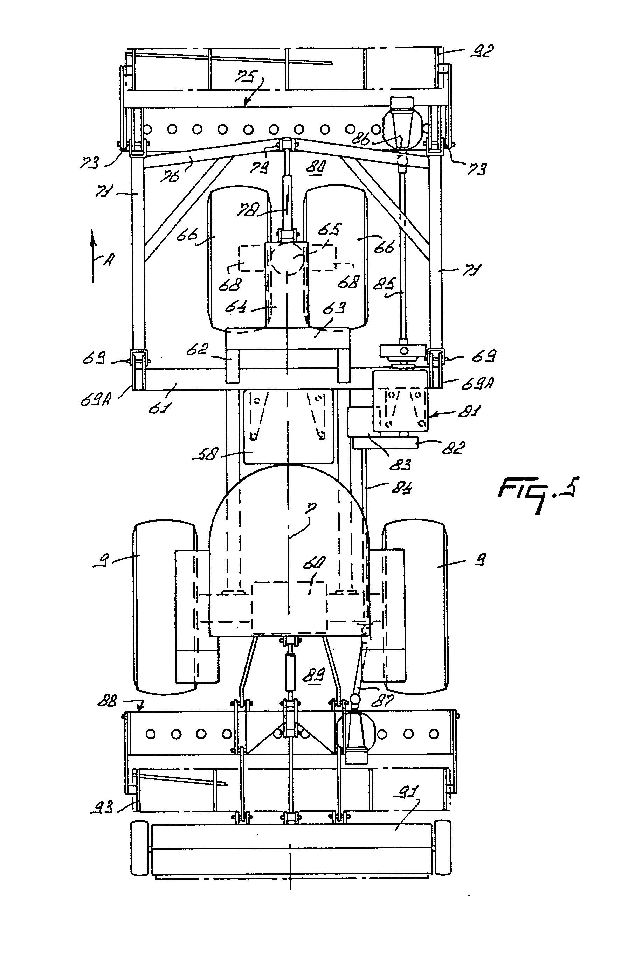

In the second embodiment as shown in Figures 4—6, the tractor again comprises a basic unit constructed from a first drive engine 58, a gear box 59 which, seen in the direction of travel A, is fitted to the rear of this engine and, subsequent to the gear box 59, a differential and gear axle housing 60 (which again serve as parts of the tractor frame) connected thereto and driving or supporting, respectively, the rear wheels 9. All these parts are again series-produced parts of a middle-class tractor, the power of the engine 58 possibly also being in the order of magnitude of 70 kW. Also in this embodiment there is connected to the front of this unit a supporting beam 61, which extends transversely of the direction of travel A and, in this embodiment, is rigidly fastened relative to the frame unit located thereafter. Rigidly connected to the supporting beam 61 are two hollow beams 62 which extend at an upward angle and to the front and are spaced from the symmetry plane 7 and interconnected near their upper and front ends by means of a hollow beam 63, which extends transversely of the direction of travel A and is rigidly fastened to the beam 61 together with the beam 62. From the centre of the longitudinal direction of the beam 63 a hollow support 64, which is rigidly connected to the beam 63 and is arranged symmetrically relative to the symmetry plane 7 of the tractor, extends in the forward direction. Near the foremost free end of the support 64 a bearing 65 is arranged in the support for bearing-supporting a set of front wheels 66, which are arranged close to each other on both sides of an approximately vertical wheel carrier 67 supported in the bearing 65. Consequently, the set of wheels 66 is jointly swivable around the centre line of the wheel carrier 67. Each one of the wheels 66 includes a hydraulic engine 68. Supporting plates 69A which are arranged vertically and support horizontal swivel axles 69 and 70, which extend transversely of the direction of travel A and are provided with a certain spacing one above the other are fitted near the ends of the supporting beam 61 (which ends together with the outer surface areas of the rear wheels 9 determine the overall working width of the tractor). The centre lines of the swivel axles 69 and 70 on both sides of the tractor are arranged in each others extension. Lifting rods 71 and 72 are capable of free rotation around the swivel axles 69 and 70. The rods 71 and 72 point forwards from the swivel axles 69 and 70 approximately horizontally and parallel to the symmetry plane 7, and are fastened capable of swivelling with respect to an agricultural machine 75, in this case a rotary harrow, by means of their front ends around swivel axles 73 and 74 provided in parallel with the swivel axles 69 and 70.

The swivel axles 69, 70 and 73, 74, respectively, are arranged approximately vertically over each other; these swivel axles 69, 70, 73, 74 are located at the vertices of an upwardly extending parallelogram (a rectangle in the shown embodiment) so that in the coupled mode the implement 75 is capable of moving up and down in parallel with itself relative to the beam 61. The coupling construction, shown in Figure 4, of the implement 75 is provided in a similar manner at the other side of the tractor. Rod systems 71 and 72 located on both sides of the tractor are coupled near the swivel axles 73 and 74 by means of supports 76 (Figure 5), which enclose the front wheels 66 at their front side in such a manner that the front wheels are swivable from their central position through an angle of approximately 65° to one side and approximately 65° to the other side without coming into contact with the above-described construction.

The end of a hydraulic cylinder 78, whose piston rod end is coupled via a swivel axle 79 to the upper coupling point of the implement 75, is swivable at the foremost end of the support 64 around a horizontal swivel axle 77, which is located transversely of the direction of travel A. The centre line of the hydraulic cylinder 78 is located in the symmetry plane 7. At each side of the tractor, the rods 71 and 72 form lower lift arms of a three-point lifting device 80 provided at the front of this tractor, whilst the hydraulic cylinder 78 constitutes the upper lift arm of this lifting device.

Also this embodiment incorporates a second drive engine 81, which here is arranged in its totality at one side of the symmetry plane 7. This furnishes the advantage that power take-off shafts outgoing from this engine can be easily passed along a side of the remaining portion of the tractor, both in the forward direction and, if desired, in the rearward direction. The second drive engine 81 is fastened to the rearmost part 58, 59, 60 of the tractor. The crank shaft of the second drive engine 81, as is also the crank shaft of the first drive engine 58, extends in parallel with the direction of travel A, as is also the case for the two engines 4, 43 of the first embodiment. The engine 81 is arranged at least partly adjacent to the engine 58 and supports at its rear end a reduction gear box 82 which extends from the outgoing shaft of the engine 81 in both downward direction and the inward direction and is driven by the first-mentioned engine. The reduction gear box 82 is attached directly to the frame and can be made operative and is controllable from the driver's seat by means of a clutch, not shown. The reduction gear box 82 has three outgoing shafts. A forwardly extending outgoing shaft which, in accordance with the plan view of Figure 5 is arranged between the two engines 58 and 81, drives a hydraulic pump 83 directly attached to the frame 1. A second outgoing shaft located in the extension of the first-mentioned outgoing shaft drives an axle 84, which is journalled directly to the frame 1, extends from the reduction gear box 82 in the rearward direction and is supported near the rear wheel housing 60, this forming a rear power take-off shaft 84. The power take-off shaft 84 is consequently remote from the symmetry plane 7. A third outgoing shaft of the reduction gear box 82 is located directly under the ingoing shaft drivable by the engine 81, more specifically at some distance below the bottom side of the second engine 81. This forwardly extending outgoing shaft is extended in the forward direction by a shaft 85 which is directly journalled relative to the frame 1, serves as a power take-off shaft and is present under the engine 81. This shaft 85 is coupled to an axle 85A which comprises universal clutches. The shaft 85A, which is directly in parallel with the symmetry plane, is supported at its front end by a bearing provided on the lower support 76 and constitutes there an outgoing drive shaft 86 of the power take-off shaft 85. In the embodiment, the outgoing drive shaft 86 is coupled to the ingoing shaft of a rotary harrow 75, whose ingoing shaft is arranged excentrically relative to the width of the machine. The rear power take-off shaft 84 is coupled by means of an intermediate shaft 87 having universal clutches to an ingoing shaft of a rotary harrow 88, provided with an excentrically constructed ingoing shaft. However, in an alternative embodiment the second engine 81 may drive only at least one front or at least one rear power take-off shaft.

It should be noted that, like in the first embodiment, the second engine 81 respectively 43 is readily detachable relative to the power take-off shaft drive parts 82, 83 respectively 51, 52, so that the second engine can be exchanged for another second engine (e.g. having a different power, drive torque or weight); the said power take-off drive parts and the power take-off shaft(s) themselves (which are undetachable with respect to the tractor) then remain in their position relative to the tractor frame.

The standard parts 58, 59, 60 are provided with the customary rear three-point lifting device 89 and a rear power take-off shaft 90 located in the symmetry plane 7.

At its rear side, the rotary harrow 88 comprises coupling points for coupling a seed drill 91.

In customary manner, the two rotary harrows 75 and 88 include rollers 92 and 93 which determine the depth of insertion of the tines of the harrows.

The hydraulic pump 83 drivable by the second engine 81 comprises hydraulic coupling means for feeding the hydraulic engines 68 of the front wheels 66. The hydraulic pump 83 includes setting means for setting the flow rate of the pump. By setting a "0" flow rate of the pump, the full power of the second engine (e.g. also approximately 70 kW) is wholly available for driving implements at the front and rear sides of the tractor via the power take-off shafts 86 and 84, respectively.

Also in this embodiment, a comparatively light drive construction of the rear wheels 9 is adequate, whilst by adding a comparatively light second drive engine 81 it is rendered possible to apply the maximum power of this second drive engine to the machines or implements coupled to the lifting device. If necessary, the driver can apply the yield of the hydraulic pump 83, driven by the engine 81, to the front wheels so as to provide a greater tractive force of the tractor (ploughing), but mostly the driven rear wheels 9 are sufficient to propel the tractor and the power of the second drive engine 81 can be utilized to its full extent for machines coupled to the tractor. As is also the case in the first embodiment, this provides a tractor having a weight considerably lower than the weight of a tractor having a power, in this embodiment, of twice 70 kW, so that the same advantages are obtained as those specified for the first embodiment.

## Claims

1. A tractor, more specifically an agricultural tractor, having at least one internal combustion engine (4, 58) for driving one or more land wheels (9) of the tractor, at least one lifting device (20, 55, 80, 89) for coupling implements to the tractor and to be driven from said engine, as well as at least one power take-off shaft (54) mounted to the tractor frame for driving an implement (50, 75, 91) coupled to a lifting device, characterized in that the tractor comprises a second internal combustion engine (43, 81) by means of which is drivable solely the implement (50, 75, 91) which is coupled to the lifting device (20, 55, 80, 89).

2. A tractor as claimed in claim 1, characterized in that the second engine (43, 81) drives at least one power take-off shaft (53, 84).

3. A tractor as claimed in claim 2, characterized in that the second engine (43, 81) drives both a front and a rear power take-off shaft (48, 53, 85A, 84).

4. A tractor as claimed in any one of the claims 1 to 3, characterized in that at least one gear reduction box (52, 82) is added to the second engine (43, 81) which reduction box produces a speed of rotation of the power take-off shaft of approximately 1000 revs/min.

5. A tractor as claimed in any one of the claims 2 to 4, characterized in that a clutch (51) is added to the second engine (43, 81) by means of which the power take-off shaft can be switched on or off.

6. A tractor as claimed in any one of the preceding claims, characterized in that the second engine (43, 81) is installed in the region of the forward half of the tractor.

7. A tractor as claimed in any one of the preceding claims, characterized in that the second engine (43, 81) is arranged at least predominantly at one side of the vertical longitudinal symmetry plane of the further part of the tractor.

8. A tractor as claimed in any one of the claims 1—6, characterized in that the second engine (43, 81) is arranged approximately symmetrically relative to the vertical longitudinal symmetry plane of the tractor.

9. A tractor as claimed in any one of the preceding claims, characterized in that the second engine (43, 81), in side elevational view, is arranged behind a front axle (28, 68) of the tractor.

10. A tractor as claimed in any one of the preceding claims, characterized in that the crank shaft of the second engine (43, 81) is located substantially in the direction of travel.

11. A tractor as claimed in any one of the preceding claims, characterized in that the tractor is provided at its front end with a power take-off shaft (48, 85A) which is drivable by a second internal combustion engine (43, 81) forming part of the tractor.

## Patentansprüche

1. Schlepper, insbesondere landwirtschaftlicher Schlepper, mit mindestens einem Verbrennungsmotor (4, 58) zum Antrieb eines oder mehrerer Fahrzeugräderr (9) des Schleppers, mit mindestens einer von dem Motor zu betätigenden Hebevorrichtung (20, 55, 80, 89) zum Anschluß von Geräten an den Schlepper, sowie mit mindestens einer am Schlepperrahmen angeordneten Zapfwelle (54) zum Antrieb eines an eine Hebevorrichtung angeschlossenen Gerätes (50, 75, 91),
dadurch gekennzeichnet, daß der Schlepper einen zweiten Verbrennungsmotor (43, 81) aufweist, mit dem ausschließlich das an die Hebevorrichtung (20, 55, 80, 89) angeschlossene Gerät (50, 75, 91) anzutreiben ist.

2. Schlepper nach Anspruch 1, dadurch gekennzeichnet, daß der zweite Verbrennungsmotor (43, 81) mindestens eine Zapfwelle (53, 84) antreibt.

3. Schlepper nach Anspruch 2, dadurch gekennzeichnet, daß der zweite Verbrennungsmotor (43, 81) sowohl eine frontseitige als auch eine heckseitige Zapfwelle (48, 53, 85A, 84) antreibt.

4. Schlepper nach einem der Ansprüche 1 bis 3, dadurch gekennzeichnet, daß dem zweiten Verbrennungsmotor (43, 81) mindestens ein Zahnrad-Untersetzungsgetriebe (52, 82) zugeordnet ist, das eine Drehzahl der Zapfwelle von etwa 1000 U/min erzeugt.

5. Schlepper nach einem der Ansprüche 2 bis 4, dadurch gekennzeichnet, daß dem zweiten Verbrennungsmotor (43, 81) eine Kupplung (51) zugeordnet ist, über die die Zapfwelle ein- und ausgeschaltet werden kann.

6. Schlepper nach einem der vorhergehenden Ansprüche, dadurch gekennzeichnet, daß der zweite Verbrennungsmotor (43, 81) im Bereich der vorderen Häfte des Schleppers angeordnet ist.

7. Schlepper nach einem der vorhergehenden Ansprüche, dadurch gekennzeichnet, daß der zweite Verbrennungsmotor (43, 81) mindestens überwiegend an einer Seite der vertikalen Längssymmetrieebene des weiteren Teiles des Schleppers angeordnet ist.

8. Schlepper nach einem der Ansprüche 1 bis 6, dadurch gekennzeichnet, daß der zweite Verbrennungsmotor (43, 81) annähernd symmetrisch zu der vertikalen Längssymmetrieebene des Schleppers angeordnet ist.

9. Schlepper nach einem der vorhergehenden Ansprüche, dadurch gekennzeichnet, daß der zweite Verbrennungsmotor (43, 81) in Seitenansicht hinter einer Vorderachse (28, 68) des Schleppers angeordnet ist.

10. Schlepper nach einem der vorhergehenden Ansprüche, dadurch gekennzeichnet, daß die Kurbelwelle des zweiten Verbrennungsmotors (43, 81) im wesentlichen in Fahrtrichtung angeordnet ist.

11. Schlepper nach einem der vorhergehenden Ansprüche, dadurch gekennzeichnet, daß der Schlepper an seiner Frontseite eine Zapfwelle (48, 85A) aufweist, die von einem zweiten Verbrennungsmotor (43, 81) anzutreiben ist, der Bestandteil des Schleppers ist.

## Revendications

1. Tracteur, en particulier tracteur agricole, ayant au moins un moteur à combustion interne (4, 58) pour entraîner une ou plusieurs roues motrices (9) du tracteur, au moins un dispositif de levage (20, 55, 80, 89) pour atteler des machines au tracteur pour les entraîner au moyen dudit moteur, ainsi qu'au moins un arbre de prise de force (54) monté sur le châssis du tracteur pour entraîner une machine (50, 75, 91) attelée à un dispositif de levage, caractérisé en ce que le tracteur comporte un deuxième moteur à combustion interne (43, 81) au moyen duquel peut être entraînée seulement la machine (50, 75, 91) qui est attelée au dispositif de levage (20, 55, 80, 89).

2. Tracteur selon la revendication 1, caractérisé en ce que le deuxième moteur (43, 81) entraîne au moins un arbre de prise de force (53, 84).

3. Tracteur selon la revendication 2, caractérisé en ce que le deuxième moteur (43, 81) entraîne à la fois un arbre de prise de force à l'avant et un autre à l'arrière (48, 53, 85A, 84).

4. Tracteur selon l'une quelconque des revendications 1 à 3, caractérisé en ce qu'au moins une boîte d'engrenages réducteurs (52, 82) est ajoutée au deuxième moteur (43, 81), laquelle boîte d'engrenages réducteurs produit une vitesse de rotation de l'arbre de prise de force d'environ 1000 tours par minute.

5. Tracteur selon l'une quelconque des revendications 2 à 4, caractérisé en ce qu'un embrayage (51) est ajouté au deuxième moteur (43, 81) au moyen duquel l'arbre de prise de force peut être embrayé ou debrayé.

6. Tracteur selon l'une quelconque des revendications précédentes, caractérisé en ce que le deuxième moteur (43, 81) est installé dans la région de la moitié antérieure du tracteur.

7. Tracteur selon l'une quelconque des revendications précédentes, caractérisé en ce que le deuxième moteur (43, 81) est disposé au moins pour la plus grande part sur un côté du plan de symétrie vertical longitudinal de l'autre partie du tracteur.

8. Tracteur selon l'une quelconque des revendications 1 à 6, caractérisé en ce que le deuxième moteur (43, 81) est disposé approximativement symétriquement par rapport au plan de symétrie vertical longitudinal du tracteur.

9 Tracteur selon l'une quelconque des revendications précédentes, caractérisé en ce que le deuxième moteur (43, 81) est disposé, en étant vu en élévation latérale, derrière un essieu avant (28, 68) du tracteur.

10. Tracteur selon l'une quelconque des revendications précédentes, caractérisé en ce que le vilebrequin du deuxième moteur (43, 81) est disposé substantiellement dans le sens de marche.

11. Tracteur selon l'une quelconque des revendications précédentes, caractérisé en ce que le tracteur est muni sur son extrémité antérieure d'un arbre de prise de force (48, 85A) pouvant être entraîné par un deuxième moteur à combustion interne (43, 81) faisant partie du tracteur.

Fig.1

FIG.2

FIG.3

FIG.6

3

FIG. 4

FIG.5

5